# EUROPEAN PATENT APPLICATION

(11) **EP 0 999 691 A1**
(43) Date of publication of application: **10.05.2000**
(21) Application number: 99308430.0
(22) Date of filing: 25.10.1999
(51) Int. Cl.: H04M 19/04

(54) **Ring type based on call related information**

(30) Priority: 04.11.1998 US 185518
(71) Applicant: LUCENT TECHNOLOGIES INC., Murray Hill, New Jersey 07974-0636 (US)
(72) Inventor: Cannon, Joseph M., Harleysville, Pennsylvania 19438 (US); Johanson, James A., Macungie, Pennsylvania 18062 (US)
(74) Representative: Watts, Christopher Malcolm Kelway, Dr.

(57) **Abstract**

A telephone ring controller includes a database associating all or part of received call related information to any one of an available plurality of audible ring types. In the disclosed embodiments, a call related information/ring type association table is maintained associating area codes, exchange numbers, household names, and/or entire telephone numbers to a particular ring type. Alternatively or additionally, ring types may be associated with digits of an incoming telephone number. When a match is determined as between received call related information and a pre-stored entry in the call related information/ring type association table, a particular ring is output by a ringer capable of at least two different types of rings. If no match is found, the telephone system operates otherwise in a conventional fashion, i.e., a default ring signal is output by the ringer. The entries in the call related information/ring type association table may be input manually using a keypad at the telephone system. Alternatively, received call related information with respect to a current (or past) incoming telephone call can be stored as an entry in the call related information/ ring type association table and associated with a particular audible ring.

## Description

### BACKGROUND OF THE INVENTION

### Field of the Invention

This invention relates generally to an apparatus and method for providing a particular ring signal in a telephone system. More particularly, it relates to an apparatus and method for providing a particular ring signal based on call related information such as Caller ID information received with respect to an incoming telephone call.

### Background of Related Art

The use of call related information units with telephone systems for recording call related information, e.g., the name and telephone number of the calling party, is proliferating at an increasing rate. Using a service such as Caller ID, a calling party's telephone number and/or household name may be transmitted by the telephone company to the called party's telephone. Using Type I service, Caller ID information is transmitted during the silent interval between the first two rings to the called party's telephone. Using Type II service, Caller ID information is received while the telephone is in an off-hook condition, e.g., Call ID Call Waiting (CIDCW). Of course, other standards exist, e.g., in the United Kingdom a standard exists wherein the call related information is transmitted prior to the first ring.

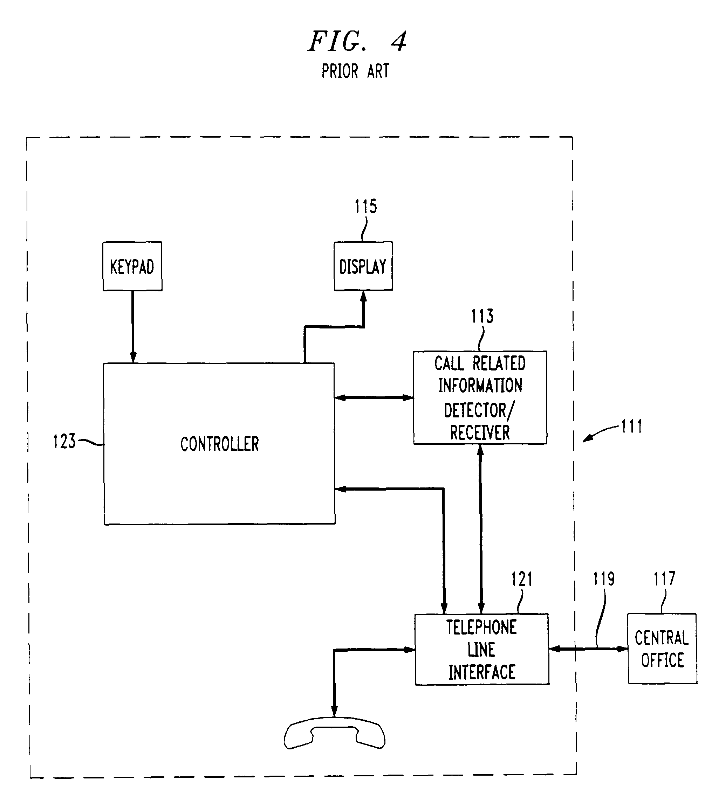

One example of a conventional telephone system having the capability to receive call related information, e.g., Caller ID information, is illustrated in Fig. 4. In particular, a telephone system **111** includes a call related information detector/receiver **113** adapted to receive a telephone number, household name, or other call related information with respect to a calling party, and to report the detected and received call related information to a controller **123** for display on a call related information display device **115**. The controller **123** controls the general functions of the telephone **111**, and may be any suitable processor for the application, e.g., a microprocessor, a digital signal processor, or a microcontroller.

The call related information is received from the central telephone office **117** over the telephone line **119** via a telephone line interface **121**. When the telephone system **111** is on-hook, the telephone number or other call related information (e.g., Caller ID information) about the calling party is received by the caller ID detector/receiver **113**, e.g., during the silent interval between the first and second rings, or before the first ring as in the United Kingdom.

Unfortunately, although the conventional call related information display device **115** allows a user to view the incoming caller's call related information, the user must nevertheless approach the telephone **111** to see the information, causing an inconvenience to the user whenever an incoming telephone call is received in determining the source of the telephone call and whether or not they want to answer it.

Accordingly, there exists a need for an apparatus and method which provides a user general call related information without requiring the user to actually approach the called telephone.

### SUMMARY OF THE INVENTION

In accordance with the principles of the present invention, a telephone system comprises a telephone line interface, a controller, a call related information receiver, and a call related information/ring type association table that is accessible by the controller. The call related information/ring type association table is adapted to contain a plurality of entries associating particular call related information with a particular ring signal. The controller directs a particular ring signal based on a match determined as between call related information received with an incoming telephone call and one of the plurality of entries in the call related information/ring type association table.

A method of outputting a particular ring from a called telephone in accordance with another aspect of the present invention comprises receiving call related information with respect to an incoming telephone call, and selecting one of a plurality of different ring signals associated with the incoming telephone call based on a pre-stored association of call related information to respective ones of the plurality of different ring signals.

A method of outputting a particular audible ring from a ringer of a called telephone in accordance with yet another aspect of the present invention comprises storing a plurality of predetermined call related information. Call related information with respect to a calling party is received and compared to the stored plurality of predetermined call related information. A particular ring signal is forwarded to the ringer to cause a desired one of a plurality of different audible ring signals based on a match found with respect to the comparison.

### BRIEF DESCRIPTION OF THE DRAWINGS

Features and advantages of the present invention will become apparent to those skilled in the art from the following description with reference to the drawings, in which:

Fig. 1 is a block diagram illustrating a telephone which provides a particular audible ring based on call related information received with respect to a telephone call constructed in accordance with the principles of the present invention.

Fig. 2 is a table illustrating contents of an exemplary embodiment of the call related information/ring type association table shown in Fig. 1.

Fig. 3 is a flow chart illustrating an exemplary process by which a particular one of a plurality of ring signals are chosen, in accordance with the principles of the present invention.

Fig. 4 illustrates a conventional telephone providing call related information.

### DETAILED DESCRIPTION OF ILLUSTRATIVE EMBODIMENTS

The present invention provides a telephone with a chosen one of a plurality of different audible rings based on call related information received with respect to an incoming call. In the disclosed embodiment, the ring type is chosen from a match of received call related information to pre-stored associations between call related information and ring types, e.g., from a call related information/ring type association table.

A ring type selector in accordance with the principles of the present invention can be used with a variety of different customer premises equipment including, but not limited to a telephone answering device, or a facsimile machine. Moreover, the principles of the present invention can be implemented at the central office and transmitted to the customer premises equipment in the form of a customized ring signal.

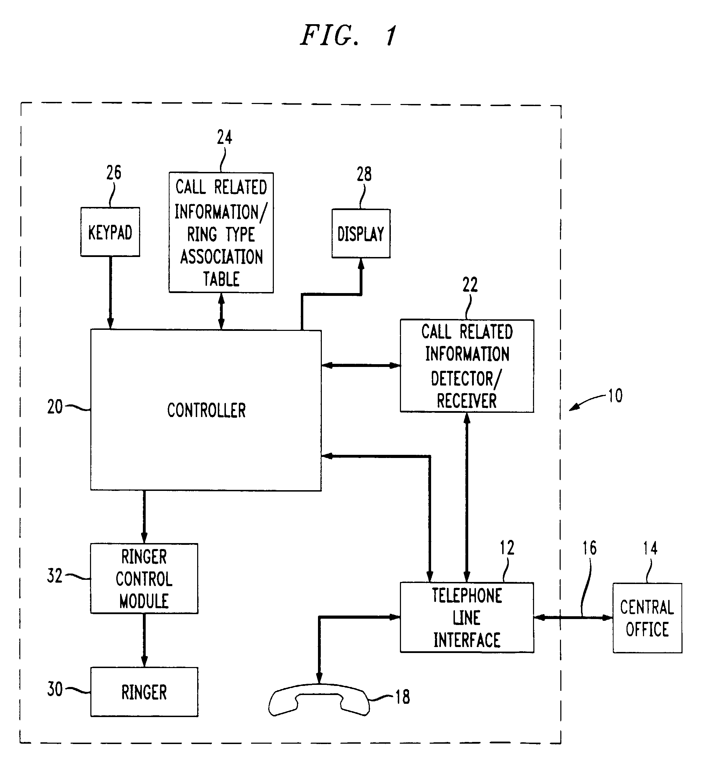

Fig. 1 illustrates one embodiment of customer premises equipment, e.g., a telephone indicated generally at **10**, capable of outputting a particular audible ring type selected based on call related information received with respect to a calling party.

The telephone **10** utilizes widely available call related information services, e.g., Caller ID services, to identify the source of an incoming telephone call. Using all or a portion of the received call related information, the caller can be determined before the incoming telephone call is answered by simply listening to the audible ring from the ringer **30** of the telephone **10**, and thus without the need to disrupt a user's current activities to move toward the telephone so as to view a display showing the received call related information.

In the embodiment of Fig. 1, the telephone system **10** includes at least one telephone line interface **12** for interconnection with a telephone company central office **14** via a telephone line **16**. A handset **18** is connected to the telephone line interface **12** to place the telephone system **10** is an off-hook condition to connect with incoming and outgoing telephone calls.

The telephone system **10** further includes a controller **20** to control the functions of the telephone system **10**. The controller **20** is typically a processor, e.g. a microprocessor, a digital signal processor, or a microcontroller.

A call information detector/receiver **22** is connected to the telephone line interface **12** to receive call related information with respect to an incoming telephone call, e.g., Caller ID information. The call related information can include, e.g., a telephone number and/or a household name associated with the incoming telephone call. A display device **28** displays the call related information received from the calling party.

A ringer **30** capable of at least two (and preferably many) type audible ring signals is included in the telephone **10**. The audible rings may differ simply by cadence, by frequency, by volume, or any other distinguishable feature.

The different ring types are created by the ringer control module **32**, which controls the audible ring output by the ringer **30**. The ringer control module **32** is, e.g., a software module in the program code of the controller **20**. Fig. 1 illustrates that the ringer control module **32** can be implemented separate from the controller **20**, but regardless will preferably be in communication with the controller **20**, in accordance with the principles of the present invention.

The audible ring type may be directly related to the telephone number of the calling party, e.g., to form a type of Morse code. Thus, three quick beeps might indicate the digit '3', etc., with pauses in between.

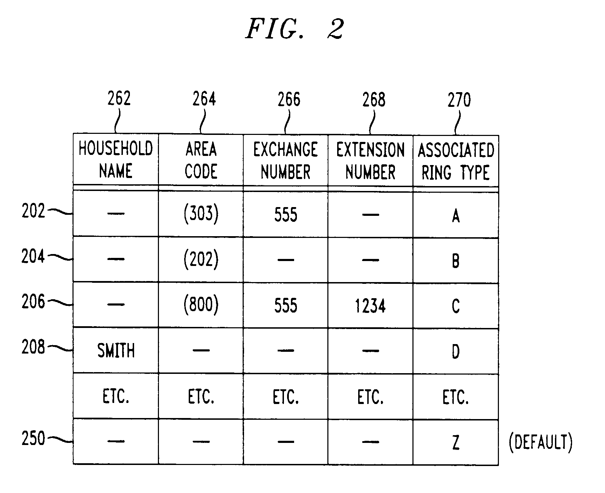

Importantly, the telephone **10** includes a database associating all or a portion of call related information to a particular audible ring type. In the disclosed embodiment, the association between received call related information and an available ring type (e.g., ring type A to Z) is stored in entries **202-208** in a call related information/ring type association table **24** (shown in detail in Fig. 2). The call related information/ring type association table **24** is preferably maintained in non-volatile memory (e.g., Flash memory) or other non-volatile storage device accessible by the controller **20**.

In particular, the telephone **10** includes a call related information/ring type association table **24** containing a plurality of pre-stored data entries **202-208** established by the user associating all or portions of the call related information, e.g., household name **262**, area code **264**, exchange number **266**, extension number **268**, etc., with a particular ring signal **270**.

The entries **202-208** in the call related information/ring type association table **24** may be pre-stored by the user. The user may input the entries **202-208** using the keypad **26** based on prompting by the controller **20** via the display device **28**. Alternatively or additionally, the entries **202-208** in the call related information/ring type association table **24** can be entered by the controller **20** upon manual "acceptance" of the latest received call related information, e.g., telephone number, by the activation of a dedicated button.

Alternatively, the entries **202-208** may be downloaded to the ring type association table **24** from an external device. For instance, the entries **202-208** may be established by a suitable spreadsheet or other application operating on a personal computer, and downloaded to the telephone **10** via a modem incorporated into or associated with the telephone **10**.

Moreover, a plurality of dedicated buttons can be implemented each associated with a particular ring type **270**. Then, upon activation of the appropriate dedicated button, the controller **20** can store an appropriate entry **202-208** in the call related information/ring type association table **24** associating that present telephone number **264-268** with the designated ring type **270**. Alternatively, a single dedicated button can be used with a particular ring type being selected, e.g., by scrolling up and down through a list of possible ring types displayed on the display **28**.

Moreover, the ringer control module **32** may allow the user to create a customized audible ring. For instance, the telephone **10** may include, e.g., three keys each representing a particular audible frequency. The length and duration of the activation of the individual keys may be stored in suitable memory by the ringer control module **32** and replayed as the customized audible ring.

Moreover, if the controller **20** includes a DTMF decoder (not shown) or other means to determine the dialed digits of an outgoing telephone number, the entries **202-208** may also be selected based on a present outgoing telephone number.

The particular ring type chosen can be 'tested' by the user by allowing the chosen ring type to be output by the ringer **30** once after acceptance, and then allowing the user to change the selected ring type if desired.

Also, telephone numbers from other memory in the telephone, e.g., speed dial numbers, can be transferred into the call related information/ring type association table **24** by the controller **20** upon user direction through the keypad **26** or other means.

The controller or processor **20** compares the received call related information with the pre-stored call related information entries **202-208** maintained in the call related information/ring type association table **24**. The pre-stored information in the call related information/ring type association table **24** can include all or portions of telephone numbers, e.g., area code or exchange number, and/or household names. The call related information/ring type association table **24** is serviced by the controller **20**.

The controller **20** determines which particular ring type is to be associated with the incoming telephone call by determining a match of received call related information with an entry **202-208** in the call related information/ring type association table **24**. When a match between the received call related information and the matchable portions **262-268** of an entry **202-208** in the call related information/ring type association table **24** is found, the particular ring type is output by the ringer **30** connected to the controller **20**.

If no match is found to any of the particular entries **202-208**, then the default ring type will be selected, e.g., from a 'match' of only the last entry **250** (having no matchable parameters) in the call related information/ring type association table **24**. Thus, if no entry **202-208** in the call related information/ring type association table **24** matches received call related information, or if no call related information is received with respect to a particular incoming telephone call, a default or other general audible ring will be output by the ringer **30**, e.g., as in conventional telephones having a single audible ring.

Some types of call related information services do not precede a first ring signal from a central office, e.g., Caller ID information. In such a case, the first ring signal may be ignored by the telephone **10** by not outputting an audible ring corresponding to that ring signal from the central office, or a default ring type may be output for the first ring. The default ring type may be stored in non-volatile memory accessible from the controller **20**, and may be pre-chosen by the user or by the manufacturer.

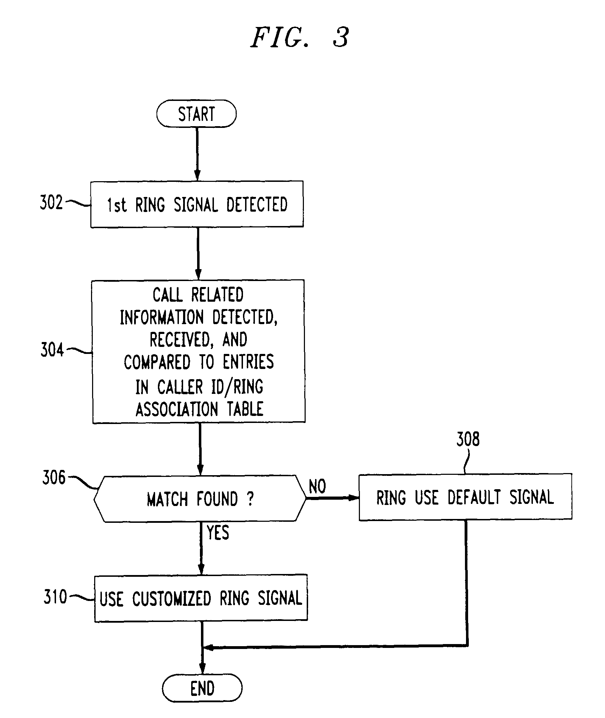

Fig. 3 illustrates a flow chart showing an exemplary process by which the telephone **10** of Fig. 1 provides a unique audible ring output from its ringer **30**.

With reference to Figs. 1-3, but in particular Fig. 3, a first ring signal is detected on a telephone line **16** in step **302**. At this point, depending upon the implementation of the invention, either a default audible ring may be temporarily output by the ringer **30** or the called telephone **10** may ignore the first ring signal until after the call related information is received.

In step **304**, call related information with respect to the incoming call is detected and received by the call related information detector/receiver **22**, and passed to the controller **20**. The controller **20** then compares the received call related information with the matchable portions **262-268** of each entry in the call related information/ring type association table **24**.

In step **306**, the controller **20** determines whether or not a match with an entry in the call related information/ring type association table **24** has been found.

If a match is not determined by the controller **20** in step **306**, or if a match is determined only with the default entry **250**, the telephone **10** will output a default audible ring from its ringer **30** in step **308** as in conventional customer premises equipment.

If, on the other hand, a match has been determined, in step **310** all subsequent ring signals with respect to that incoming call will be output from the ringer **30** based on the associated ring type.

For home business users, the telephone **10** of the present invention can provide immediate audible notification as to whether the incoming telephone call is a business call or a personal call based on call related information. For instance, full or partial call related information (e.g., just an area code) can be pre-stored in the call related information/ring type association table **24** relating to business calls, and the same for personal calls, with business calls perhaps having a particular ring signal type and personal calls having a different particular ring signal type. Similarly, a home telephone number can be associated with a particular ring type which will be distinctly recognized by the user without having to glance at a display on the telephone.

Although the disclosed embodiments were described with respect to a particular audible ring for each pre-stored caller, the principles of the present invention relate equally to larger groups of callers. For instance, a particular audible ring may be associated with each area code, and/or with each exchange number. The ring type can alternatively or additionally be associated with and thus distinguishable based on whether it is a local incoming call, long distance incoming call, or international incoming call.

Moreover, the call related information/ring type association table **24** may simply relate digits of a telephone number to particular audible rings, without specifically identifying a particular caller or area code. Thus, for instance, the table may relate a telephone number beginning with the number '5' with a particular audible ring, which will be used for that incoming call.

Furthermore, while the disclosed embodiments describe an audible ring selection made within customer premises equipment, the principles of the present invention relate equally to a service provided by a central office to provide unique ring signals (e.g., having different cadence) to the customer premises equipment based on a database associating particular call related information (e.g., a telephone number, portion of a telephone number, or household name) to a particular one of the available ring signals.

While the invention has been described with reference to the exemplary embodiments thereof, those skilled in the art will be able to make various modifications to the described embodiments of the invention without departing from the scope of the invention.

## Claims

1. A telephone system, comprising:
a telephone line interface;
a controller;
a call related information receiver; and
a call related information/ring type association table that is accessible by said controller, said call related information/ring type association table being adapted to contain a plurality of entries associating particular call related information with a particular ring signal;
wherein said controller directs a particular ring signal based on a match determined as between call related information received with an incoming telephone call and one of said plurality of entries in said call related information/ring type association table.

2. The telephone system according to claim 1, wherein:
said call related information receiver is a Caller ID information receiver.

3. A telephone ringer, comprising:
a controller adapted to control operations of a telephone;
a call related information detector/receiver adapted to receive call related information with respect to an incoming telephone call; and
a ringer control module in communication with said controller, said ringer control module being adapted to cause output of one of a plurality of different ring signals based on a content of call related information received by said call related information detector/receiver with respect to said incoming telephone call.

4. The telephone according to claim 3, wherein:
said call related information is Caller ID information.

5. The telephone according to claim 3, wherein:
said call related information is at least a portion of a telephone number.

6. The telephone according to claim 3, wherein:
said call related information is a household name.

7. A method of outputting a particular ring from a called telephone, said method comprising:
receiving call related information with respect to an incoming telephone call; and
selecting one of a plurality of different ring signals associated with said incoming telephone call based on a pre-stored association of call related information to respective ones of said plurality of different ring signals.

8. The method of outputting a particular ring from a called telephone according to claim 7, further comprising:
transmitting said selected one of said plurality of different ring signals as an electronic signal from a central office to a called telephone.

9. The method of outputting a particular ring from a called telephone according to claim 7, wherein:
said plurality of ring signals are audible ring signals.

10. The method of outputting a particular ring from a called telephone according to claim 7, wherein:
said one of said plurality of different ring signals is chosen by comparing said received call related information to information in a call related information/ring type association table.

11. The method of outputting a particular ring from a called telephone according to claim 7, wherein:
said particular one of said plurality of different ring signals is chosen based on a match between said received call related information and information in a call related information/ring type association table.

12. A method of outputting a particular audible ring from a ringer of a called telephone, said method comprising:
storing a plurality of predetermined call related information;
receiving call related information with respect to a calling party;
comparing said received call related information to said stored plurality of predetermined call related information; and
forwarding a particular ring signal to said ringer to cause a desired one of a plurality of different audible ring signals based on a match found with respect to said comparison.

13. The method of outputting a particular audible ring from a called telephone according to claim 12, wherein:
said predetermined call related information is stored by acceptance of current call related information relating to previously received telephone call.

14. The method of outputting a particular audible ring from a called telephone according to claim 13, wherein:
said stored call related information is associated with a particular one of a plurality of different audible ring signals.

15. The method of outputting a particular audible ring from a called telephone according to claim 12, further comprising:
providing a default ring signal type to said telephone if a match is not found with respect to said comparison.

16. Apparatus for outputting a particular ring from a called telephone, comprising:
means for receiving call related information with respect to an incoming telephone call; and
means for selecting one of a plurality of different ring signals associated with said incoming telephone call based on a pre-stored association of call related information to respective ones of said plurality of different ring signals.

17. The apparatus for outputting a particular ring from a called telephone according to claim 16, further comprising:
means for 'transmitting said selected one of said plurality of different ring signals as an electronic signal from a central office to a called telephone.

18. The apparatus for outputting a particular ring from a called telephone according to claim 16, wherein:
said plurality of ring signals are audible ring signals.

19. The apparatus for outputting a particular ring from a called telephone according to claim 16, wherein:
said one of said plurality of different ring signals is chosen by comparing said received call related information to information in a call related information/ring type association table.

20. The apparatus for outputting a particular ring from a called telephone according to claim 16, wherein:
said particular one of said plurality of different ring signals is chosen based on a match between said received call related information and information in a call related information/ring type association table.

21. Apparatus for outputting a particular audible ring from a ringer of a called telephone, comprising:
means for storing a plurality of predetermined call related information;
means for receiving call related information with respect to a calling party;
means for comparing said received call related information to said stored plurality of predetermined call related information; and
means for forwarding a particular ring signal to said ringer to cause a desired one of a plurality of different audible ring signals based on a match found with respect to said comparison.

22. The apparatus for outputting a particular audible ring from a called telephone according to claim 21, wherein:
said predetermined call related information is stored by acceptance of current call related information relating to previously received telephone call.

23. The apparatus for outputting a particular audible ring from a called telephone according to claim 21, wherein:
said stored call related information is associated with a particular one of a plurality of different audible ring signals.

24. The apparatus for outputting a particular audible ring from a called telephone according to claim 21, further comprising:
means for providing a default ring signal type to said telephone if a match is not found with respect to said comparison.

25. A telephone ringer, comprising:
a controller adapted to control operations of a telephone;
a call related information detector/receiver adapted to receive call related information with respect to an incoming telephone call; and
a ringer control module in communication with said controller, said ringer control module being adapted to cause output of a user designed ring signal based on a content of call related information received by said call related information detector/receiver with respect to said incoming telephone call.
